(19)

**Europäisches Patentamt**
**European Patent Office**
**Office européen des brevets**

(11)  **EP 3 376 689 A1**

(12)  # EUROPEAN PATENT APPLICATION

(43) Date of publication:
**19.09.2018  Bulletin 2018/38**

(51) Int Cl.:
**H04B 10/2513** [(2013.01)]

(21) Application number: **17305295.2**

(22) Date of filing: **17.03.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicants:
• **Mitsubishi Electric R&D Centre Europe B.V.
1119 NS  Schiphol Rijk Amsterdam (NL)**
Designated Contracting States:
**FR**
• **Mitsubishi Electric Corporation
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventor: **FROC, Gwillerm
35708 RENNES Cedex 7 (FR)**

(74) Representative: **Cabinet Plasseraud
66, rue de la Chaussée d'Antin
75440 Paris Cedex 09 (FR)**

(54) **OPTICAL FIBER TRANSMISSION WITH GROUP PROPAGATION DELAY EQUALIZATION**

(57)     An optical fiber transmission process implements group propagation delay equalization. At least one among an optical line termination (1) and an optical network unit (10a-10e) which are involved in transmitting data symbols, implements a filtering of said data symbols for compensating at least part of the group propagation delay. The filtering is based on filtering coefficients which are stored in at least one look-up table (43a, 43b) at the optical line termination or optical network unit, and selected based on features of the optical transmission of the data symbols.

FIG. 3

**Description**

The invention relates to an optical fiber transmission process which implements group propagation delay equalization. It also relates to an optical network equipment and an equalizer calculation module which are suitable for implementing such optical fiber transmission process.

**-- BACKGROUND OF THE INVENTION --**

Optical fiber transmission networks, in particular optical access networks, are intended to support transmission rates of more than 10 Gbit/s (gigabits per second), in particular up to 25 Gbit/s or 50Gbit/s. Then, symbols which are used for data transmission, called data symbols, form high transmission rate streams in which the data symbols are transmitted after one another with very short time shift between two data symbols successively transmitted.

But optical fiber transmission suffers from transmission features of the optical fibers used, such as optical signal absorption and dispersion. More specifically, dispersion relates to variations in propagation delay that exist between several components of the optical signal transmitted. These signal components propagate through one optical fiber with respective propagation speed values, which are different from each other. As a consequence, the signal which is recovered after transmission of one data symbol through the optical fiber, as resulting from the transmitted signal components, in altered in shape when compared to the signal of the data symbol before transmission. In particular, the data symbol after transmission is time-spread over an increased duration, while its peak magnitude value has decreased. Because of this, data symbols which are successively transmitted overlap one another when being received, which causes a reception error rate to increase. Such increase in the error rate due to dispersion becomes important at transmission rates higher than 10 Gbit/s, and cannot be accepted as such.

One major dispersion type for an optical fiber transmission is the so-called chromatic dispersion. The chromatic dispersion consists in the variations of the propagation speed as a function of a wavelength value for a monochromatic wave which is transmitted through the optical fiber. Then, independent optical spectral components which form together a data symbol before transmission, reach a desired reception equipment after transmission delays which vary between different ones of the optical spectral components. The signal recovered after transmission is therefore altered in shape, including increased time-spreading of each data symbol and inter-symbol overlapping, due to the spectral propagation delays and spectral recombination at the reception equipment. In the jargon of the Man skilled in propagation, the variations of the propagation delay as a function of the optical wavelength is called group propagation delay. But such variations due to the chromatic dispersion are deterministic and can be calculated from optical transmission features which relate to the optical fiber propagation path used for transmission, and to the optical signal implemented for the data symbols.

One could contemplate assessing the chromatic dispersion of the actual transmission path which is used by the data symbols, for example by implementing a predetermined transmission probe sequence, and then inferring the chromatic dispersion from an analysis of the probe sequence as received after being transmitted. Then, a data symbol sequence transmitted through the same transmission path could be compensated for chromatic dispersion effects based on the chromatic dispersion as assessed from the probe sequence. But such process requires training methods for inferring the chromatic dispersion which is effective for the transmission path from the probe sequence as received. Important calculation resources as well as significant calculation latencies are then necessary, but which are not compatible with the price, the energy consumption and the transmission rates which are targeted for future optical transmissions.

Another issue for future optical fiber transmission networks is to allow fronthauling. Fronthauling consists in carrying out part of the OSI stack in a core equipment of a transmission network such as a central office, instead of an end equipment such as a base station dedicated to interfacing between optical and radio transmission modes. Fronthauling leads to reductions in hardware resources and energy consumption at the end equipment, but it requires reducing intra bit-stream latencies and also requires higher optical transmission capacities, mainly higher transmission rates.

Starting from this situation, one object of the present invention consists in providing a new transmission process which alleviates dispersion effects on data symbols transmitted, so that dispersion causes less increase in the reception error rate. In particular, the invention may be directed to alleviate chromatic dispersion effects.

A further object of the invention is to provide such transmission process which does not involve significant cost increase and significant additional energy consumption, and is compatible with transmission rates higher than 10 Gbit/s.

Another object of the invention is to enable optical fiber transmission rates which are high enough for implementing fronthauling.

**-- SUMMARY OF THE INVENTION --**

For meeting at least one of these objects or others, a first aspect of the present invention proposes a novel optical fiber transmission process, for transmitting a plurality of data symbols through an optical fiber transmission network which connects an optical line termination to at least one optical network unit. According to the invention, at least one among the optical line termination and the optical network unit, thereafter called equalizing end, is provided with storage means which are suitable for storing a series of filtering coefficient values, and with combination means which are suitable for linearly combining the data symbols successively transmitted.

The invention process comprises transmitting successively the data symbols upstream or downstream between the optical line termination and the optical network unit, and also comprises the following steps:

/1/ collecting values of optical transmission features which are implemented for the transmission of the data symbols;

/2/ based on the values of the optical transmission features, calculating a set of respective values for the filtering coefficients, which are suitable for forming a digital filter when these filtering coefficients are used for linearly combining the data symbols successively transmitted, and such that the digital filter equalizes at least partially a group propagation delay which is effective onto the data symbols being transmitted, and called dispersion delay;

/3/ storing the values calculated for the filtering coefficients at the equalizing end; and

/4/ by the combination means of the equalizing end: processing the data symbols successively transmitted with the digital filter formed by the filtering coefficient values stored, so that recovered data symbols which are obtained after both the transmission and filter-processing of the data symbols, have reduced symbol time-spreading and reduced inter-symbol overlapping due to dispersion, when compared to transmission of the data symbols without filter-processing.

In the invention process, the filter-processing of the data symbols may be carried out either after transmission of the data symbols between the optical line termination and the optical network unit, which is called post-transmission filter-processing, or before their transmission, called prior-transmission filter-processing. Combining distributed filter-processing executions which are carried out both before and after transmission of the data symbols is also possible. In such latter case, each filter-processing execution only produces part equalization of the group propagation delay.

The invention process can be implemented either for downstream transmission, from the optical line termination to the optical network unit, or for upstream transmission, from the optical network unit to the optical line termination.

Also because the filtering coefficient values are stored at the equipment where the data symbols are filter-processed, the data symbols can be processed on-the-flight according to the transmission rate, without decreasing this latter. In particular, there is no need for the equalizing end to transmit or receive signals relating to the setup and execution of filter-process while a data symbol stream is being currently filter-processed. Therefore, no latency is caused by the invention filter-processing.

Additionally, the invention process allows separating within the optical fiber transmission network, the equalizing end which implements actually the filter-processing of the data symbols and the equipment which performs the calculation of the filtering coefficient values. This is called sometimes softwarization of the transmission network. It allows sharing one and same module which is dedicated to calculating the filtering coefficients, between a great number of optical line terminations and optical network units connected to the optical fiber transmission network. The module which calculates the values of the filtering coefficients may be called equalizer calculation module. It is connected directly or indirectly to the optical fiber transmission network, possibly at any location thereof, and transmits the values calculated for the filtering coefficients to the equalizing end, through the optical fiber transmission network. These values for the filtering coefficients may be transmitted together with values of optical transmission features which apply for the transmission path between the optical line termination and the optical network unit. Such transmission may be performed initially or during subsequent updates, but also possibly while a data symbol stream is being processed.

The equalizer calculation module being common to a great number of equalizing ends allows cost reduction, in particular because its use yield can be shared between different user types which are active during separate time periods, for example residential users and business users.

In particular, the filtering coefficients calculated in step /2/ may be such that processing the data symbols with the digital filter equalizes at least partially a chromatic dispersion. Then, the optical transmission feature values which are collected in step /1/ may comprise at least one among:

- a wavelength value of an optical carrier which is used for transmission of the data symbols;

- an optical fiber length value which is effective for transmission of the data symbols between the optical line termination and the optical network unit;

- a feature of a spectral support which is used for forming the data symbols transmitted; and

- optionally, at least one transfer function pertaining to an optical component which exists within the optical fiber transmission network on a transmission path used by the transmitted data symbols between the optical line termination and the optical network unit.

Dispersion features of at least one optical fiber which belongs to the transmission path between the optical network unit and the optical line termination may be collected at the same time, but they may be already available or automatically implemented when calculating the filtering coefficients in step /2/.

In possible implementations of the invention which are directed to alleviating chromatic dispersion effects, the filtering coefficients may be calculated in step /2/ by successively performing the following sub-steps:

/2-1/ calculating a transfer function of the optical fiber transmission path which is used by the data symbols between the optical line termination and the optical network unit, from the values collected in step /1/ for the optical transmission features;

/2-2/ calculating an impulse response of the transmission path, using a Fourier transform of the transfer function;

/2-3/ calculating a Z-transform of the impulse response; then

/2-4/ determining the series of filtering coefficients as polynomial coefficients of a complex function equal to unity divided by the Z-transform of the impulse response.

Generally, the data symbols transmitted may be amplitude-modulated data symbols, as used in 2-state pulse amplitude modulation as an example, but also possibly 4- or 8-state pulse amplitude modulation, but any kind of phase and/or amplitude modulation may be used as well.

Also generally for the invention, the data symbols may be transmitted through the fiber transmission network between the optical line termination and the optical network unit at a rate of between 10 Gbit/s and 100 Gbit/s.

A second aspect of the invention proposes an optical network equipment for optical fiber transmission network, which is suitable for forming either an optical line termination or an optical network unit, and which comprises:

- coefficient reception means, which are suitable for receiving values of filtering coefficients;

- storage means, which are suitable for storing the received values of the filtering coefficients; and

- combination means, also called equalizer, suitable for linearly combining data symbols which are successively transmitted or received by the optical network equipment, using the stored values of the filtering coefficients.

The storage means of the optical network equipment may comprise at least one look-up table which has values of optical transmission features for forming entries of this look-up table, and is designed for containing the values of the filtering coefficients in connection with combinations of the entries. Then, the optical network equipment may further comprise:

- means for obtaining the values of the optical transmission features which are implemented for a data symbol transmission originating from or ending up at this optical network equipment; and

- means for reading out the values of the filtering coefficients from the at least one look-up table, based on the values obtained for the optical transmission features.

Preferably, the storage means may comprise at least two look-up tables: one dedicated to data symbol transmissions which end up at the optical network equipment, and another one dedicated to data symbol transmissions which originate from the optical network equipment. Then, the optical network equipment is further adapted for selecting one of the look-up tables based on the transmission either ending up at the optical network equipment or originating from this optical network equipment. Put another way, the equipment can implement both post-transmission and prior-transmission filter-processing of the data symbols.

Finally a third aspect of the invention proposes an equalizer calculation module, which is suitable for transmitting values to at least one equipment connected to an optical fiber transmission network, and which comprises:

- selection means, suitable for selecting respective values of optical transmission features which relate to a transmission of data symbols between an optical line termination and an optical network unit of the optical fiber transmission network;

- equalizer calculation means, suitable for calculating from the values selected for the optical transmission features, a set of respective values for filtering coefficients which form a digital filter when these filtering coefficients are used for linearly combining the data symbols successively transmitted, and such that processing these data symbols with the digital filter equalizes at least partially a group propagation delay which is effective onto the data symbols being transmitted in accordance with the optical transmission feature values selected; and

- transmission means, which are suitable for transmitting the values calculated for the filtering coefficients to at least one of the optical line termination and the optical network unit where equalization of the group propagation delay is to be implemented for data symbols transmitted.

The optical network equipment of the second invention aspect and the equalizer calculation module of the third invention aspect are adapted for implementing a process according to the first invention aspect, including the preferred but optional cited implementation features.

The invention will be now described with reference to the appended figures, which relate to preferred but not-limiting implementations of the invention.

-- BRIEF DESCRIPTION OF THE DRAWINGS --

Figure 1 illustrates an optical fibre transmission network in which the invention is implemented;

Figure 2 is a block diagram of process steps which are executed within an equalizer calculation module according to the invention;

Figure 3 is a block diagram of an optical network equipment according to the invention; and

Figure 4 is a block diagram of process steps which are executed within the optical network equipment of Figure 3.

-- DETAILED DESCRIPTION OF THE INVENTION --

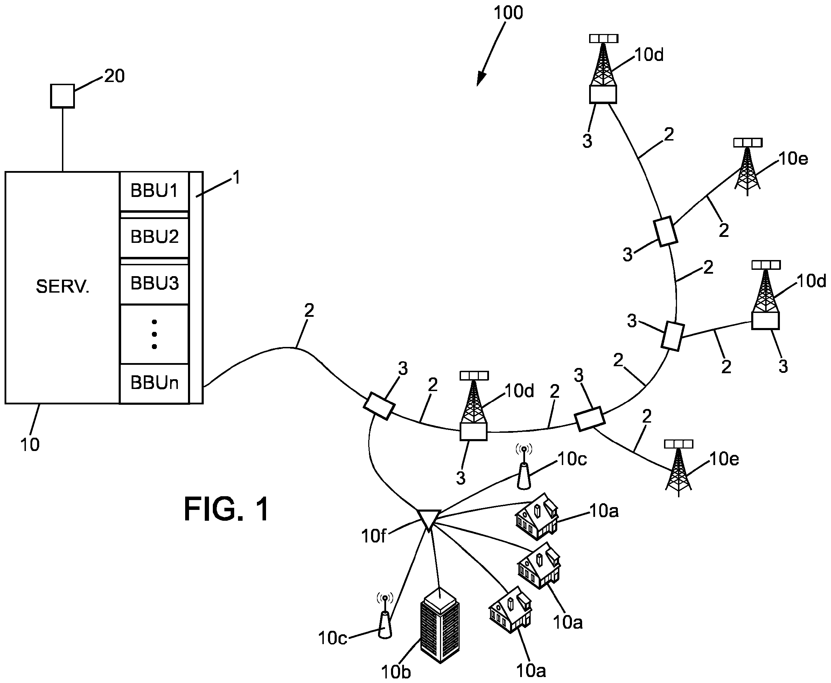

Figure 1 shows an optical fibre transmission network 100 in which the present invention can be applied. For clarity sake, connections from only one optical line termination to several optical network units are shown.

The optical line termination 1 may pertain to a central office 10 for example, further including one or several server units, noted SERV, and one or several baseband units, noted BBU1, BBU2, BBU3,..., BBUn. Each baseband unit contains a monochromatic light source, most often of tunable laser type, with a respective wavelength range which is different from that of each other baseband unit. Each wavelength value produced by one of the baseband units BBU1, BBU2, BBU3,..., BBUn corresponds to a separate optical carrier, generally in the range of 1260 nm (nanometre) to 1650 nm, and is further contained within a transmission range of the optical fibres 2 of the network 100. Possibly one and same wavelength value may be produced by several ones of the baseband units, respectively during separated time periods. The tuning extent of each light source is usually from about 4 nm to about 20 nm. Each optical carrier is dedicated to one of several optical network units 10a-10e which are connected to the optical fibre transmission network 100. The optical line termination 1 is arranged between the outputs of the baseband units BBU1, BBU2, BBU3,..., BBUn and the optical fibre transmission network 100, for collecting the modulated light beams which originate from all the baseband units, and bringing them into the first optical fibre 2 from the optical line termination 1. The optical line termination 1 also forwards optical signals which are transmitted by any one of the optical network units 10a-10e, to detection means of one of the baseband units BBU1, BBU2, BBU3,..., BBUn.

The optical network units 10a-10e may be residential (10a) or office (10b) facilities, for example with Fiber-To-The-Home or Fiber-To-The-Building connection types, small-cell radio stations (10c) connected through a power splitter 10f, and mobile base stations, either with backhauling (10d) or fronthauling (10e) architecture. Each optical network unit 10a-10e is connected to the optical line termination 1 through optical fibers 2 and wavelength splitters 3.

The invention may be applied in particular when the optical signals are amplitude-modulation keyed, using for example two, four or eight amplitude states for each symbol transmitted. For easier understanding but in a non-limiting way, one may consider that the invention is described thereafter for two-state pulse amplitude modulation, in particular for on-off keying.

Each optical fiber 2 may have a length of between 0.1 km (kilometre) to several tens of kms, depending on the geographical distribution of the optical network units 10a-10e. Then, each optical fiber 2 being long enough produces alterations in the optical signals which are transmitted through this fiber. From this matter of fact, the invention applies for mitigating these signal alterations when at least part of these alterations is deterministic, from optical transmission features which are implemented for transmitting the signals concerned. However, the invention is compatible with non-deterministic signal alterations, for example stochastic alterations, existing in addition to the deterministic alterations. Under such circumstances, the invention leads to mitigating or compensating only the deterministic part of the signal alterations.

The invention is directed to optical signal alterations of dispersion type, occurring upon transmission of the optical signals. The dispersion alterations cause that distinct components of the signal are transmitted with values for the propagation speed which are different. Then, the signal components travel along the optical fiber with travel durations which are different, and the superposition of the components which are shifted in time after transmission does not result in a signal shape which is the same as that before transmission. In particular, one data symbol is spread over a time duration which has been increased, causing successive data symbols to overlap after transmission.

For illustrative purpose, the invention will be now described for chromatic dispersion, which causes different monochromatic components of one and same data symbol, each corresponding to a respective wavelength value, to travel along one and same optical fiber with travel durations which are different. This corresponds to the well-known physical parameter which is called group propagation delay, and noted $\tau$, or $\tau_{CD}$ for the particular case of group propagation delay due to chromatic dispersion.

The chromatic dispersion that is effective onto data symbols which are transmitted between the optical line termination 1 and one of the optical network units 10a-10e, for example the base station 10e, depends on the following optical transmission features:

$\lambda_0$: the wavelength of the optical carrier which is used for transmitting these data symbols;

L: the optical fiber length of the transmission path within the optical fiber transmission network 100, which is used for transmitting the data symbols between the optical line termination 1 and the optical network unit 10e;

$S(\Omega)$: the spectral support which is used for keying the data symbols transmitted, as a function of an optical frequency $\Omega$. For example, $S(\Omega)$ may be the spectral density of the signal amplitude;

chromatic dispersion features of the optical fiber 2 which belongs to the transmission path used for transmitting the data symbols between the optical line termination 1 and the optical network unit 10e; and

optionally, a transfer function for each optical component which possibly exists on the transmission path used for transmitting the data symbols between the optical line termination 1 and the optical network unit 10e.

For example, a chromatic dispersion feature of the optical fiber 2, which is suitable for implementing the invention, may be the propagation delay as a function of the optical frequency $\Omega$, per length unit of the optical fiber 2. Indeed, the actual group propagation delay $\tau_{CD}(\Omega)$, in addition to being a function of the optical frequency $\Omega$, is also proportional to the fiber length L.

Reference number 20 in Figure 1 denotes an equalizer calculation module which is connected to the optical fibre transmission network 100. As represented, the equalizer calculation module 20 is connected indirectly to the optical fibre transmission network 100, through the server of the central office 10, but other connection modes for the module 20 to the network 100 are possible. The transmission between the equalizer calculation module 20 and the server of the central office 10 may be IP- of Ethernet-type. The equalizer calculation module 20 is dedicated to calculating a digital filter intended to mitigate or compensate the chromatic dispersion effects on data symbols which are transmitted successively from the optical line termination 1 to the optical network unit 10e, or in reverse sense. Such filter is to be applied digitally on the sequence of successive data symbols, commonly called data stream, either before transmission so that the data symbols are received without being each time-enlarged and mixed, or after transmission for recovering the data symbols with their initial shapes and separate time-distribution as existing before transmission. Also possibly, the data symbols may be filter-processed both before and after transmission, so that the combination of both filter-process executions allows recovering the data symbols without dispersion effects, or with mitigated dispersion effects.

The digital filter is determined by a set of filtering coefficients, which are used as factors for linearly combining successive sampled values of the data symbol sequence. The digital filter has the following mathematical formula, when it is designed to be applied to the data symbol sequence after transmission:

$$\hat{I}_k = \Sigma_{j=-K \text{ to } K} \ c_j \cdot v_{k-j} \qquad\qquad (1)$$

where K is a non-zero integer which determines the filter length, $c_j$ is the $j^{th}$ filtering coefficient of the filter, j being an integer index from -K to K, $\hat{I}_k$ is the $k^{th}$ filter-estimated data symbol value, k being another integer index from -K to K, and $v_{k-j}$ is the $(k-j)^{th}$ sampled data symbol value obtained from the as-received data symbol sequence. The Man skilled in the art of signal processing will be able to convert formula (1) for a digital filter to be applied to the data symbol sequence before it is transmitted.

The equalizer calculation module 20 calculates the filtering coefficients $c_j$ for several combinations of values each related to one of the optical transmission features listed above. The values obtained for the filtering coefficients $c_j$ are then transmitted by the module 20 to each one of the optical network units 10a-10e and the optical line termination 1. Such transmission may be performed using the optical fiber transmission network 100, by implementing any transmission mode either in-band or off-band. For example, low-frequency modulation of an optical carrier, separate from the modulation of the same optical carrier that is used for data symbol transmission, may be implemented for transmitting the $c_j$-values. In such case, the $c_j$-values can be transmitted at any time, even while a data symbol stream is being transmitted at the same time. Alternatively, the $c_j$-values can be transmitted using the same channel as for the data symbols, but during time periods where no data symbol is being transmitted, and at a transmission rate which is lower than that of the data symbols. Then, the optical network units 10a-10e and the optical line termination 1 each store in a look-up table which is hosted by this optical network unit or optical line termination, the values received for the filtering coefficients $c_j$ in connexion with the values of the optical transmission features that have been used for their calculation. To this end, the carrier wavelength $\lambda_0$, the optical fiber length L and the spectral support $S(\Omega)$ form entries of the look-up tables. An additional entry may be optionally the filter length parameter K. The values which are read out from each look-up table are thus those of the filtering coefficients $c_j$. Because the filter to be applied after transmission is different from that to be applied before transmission, although using same optical transmission feature values in both cases, each filter is calculated separately by the equalizer calculation module 20, and a separate look-up table is hosted by each optical network unit or optical line termination, so that any of these latter is each capable of filter-processing both data symbols that it transmits and data symbols that it receives.

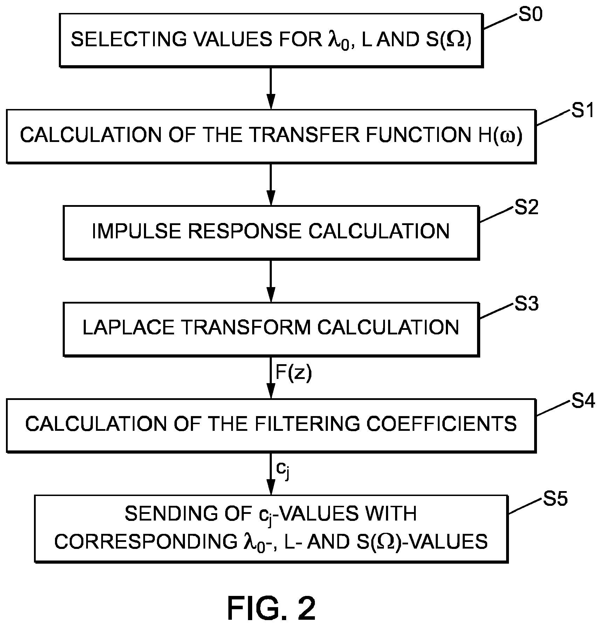

Referring to Figure 2, the operation of the equalizer calculation module 20 is now described.

In step S0, respective values for the optical carrier wavelength $\lambda_0$, the optical fiber length L, and the spectral support $S(\Omega)$ are selected.

Then, in step S1, the transfer function $H(\omega)$ of an optical fiber path which has the transmission feature values selected in step S0, may be calculated using the following formula:

$$H(\omega) = \int S(\Omega) \cdot \exp[-i \cdot \omega \cdot \tau_{CD}(\Omega)] \ d\Omega \qquad\qquad (2)$$

where i is the imaginary unit for complex numbers, exp is the exponential function, and $\omega$ is a real number representing a pulsation. The group propagation delay $\tau_{CD}(\Omega)$ per optical fiber length unit may be available directly at the equalizer calculation module 20. The Man skilled in the art knows how to adapt this formula (2) for additionally taking into account transfer functions of optical components which possibly exist on the optical fiber transmission path.

The impulse response of the optical fiber transmission path is calculated in step S2 by Fourier transforming the transfer function $H(\omega)$.

Then, in step S3, the Z-transform, also called discrete Laplace transform, of the impulse response is calculated. The complex z-function thus obtained, noted F(z), can be expressed in the following polynomial form:

$$F(z) = \Sigma_{k=-K \text{ to } K} \ f_k \cdot z^k \qquad\qquad (3)$$

where z is the complex Laplace parameter, and $f_k$ is the $k^{th}$ coefficient of the polynomial form of the F(z) function.

The filtering coefficients $c_j$ can then be obtained in step S4 by solving the following $(2K+1) \times (2K+1)$ square linear equation system:

$$q_n = \Sigma_{j=-K \text{ to } K} \ f_{n-j} \cdot c_j \qquad\qquad (4)$$

where n is an integer from -K to K, and $q_n$ equals 1 for n=0 otherwise $q_n$ is zero (for n different from 0). The $c_j$ filtering coefficients which are obtained in this way are those of the polynomial form of the complex z-function C(z) = 1/F(z):

$$C(z) = \Sigma_{k=-K \text{ to } K} \; c_j \cdot z^j \qquad\qquad (5)$$

Such process for calculating the filtering coefficients $c_j$ was known before the invention for other applications, in particular for non-optical fiber based transmission systems, and it has been summarized just above for the purpose of providing an enabling description of one invention implementation. However, anyone will be able to report to appropriate literature if more detailed explanations are necessary. A suitable lecture book in this concern may be "Digital Communication", J.G. Proakis, MacGraw Hill, 1995.

In the last step performed by the equalizer calculator module 20, labelled S5, the module transmits the $c_j$-values to the optical network units 10a-10e and optical line termination 1, in connection with the optical transmission feature values which have been used for calculating these $c_j$-values.

Such operation of the equalizer calculator module 20 may be triggered at an initialization of the optical fiber transmission network 100, or upon routine updating, or also upon upgrades of the network 100 or insertion or replacement of some of its optical transmission components.

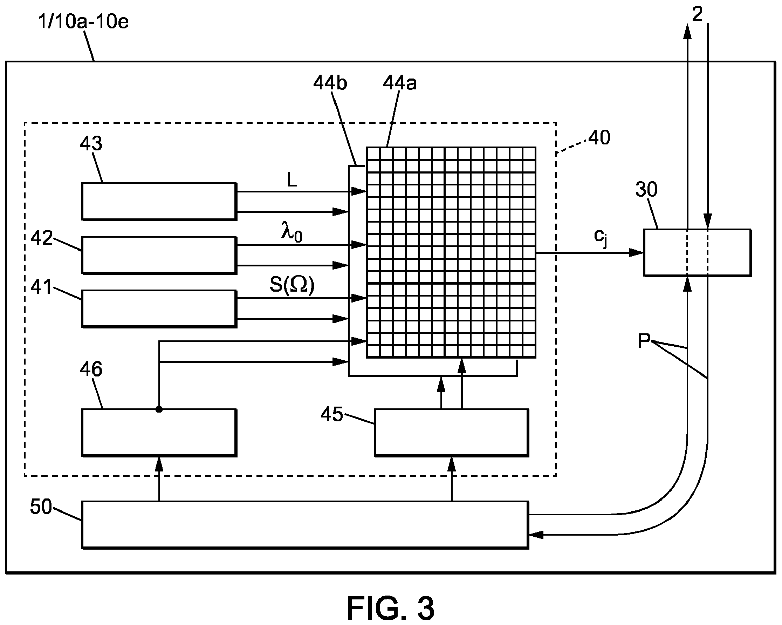

Figure 3 reproduces an equipment structure suitable for implementing the invention, for one or several of the optical network units 10a-10e and/or for the optical line termination 1. The references indicated in Figure 3 have the meanings now listed:

| | |
|---|---|
| 30 | equalizer, also called combination means in the general part of this description |
| 40 | compensation manager |
| 41 | modulation management unit |
| 42 | wavelength management unit |
| 43 | ranging unit |
| 50 | data recovering and source unit |
| P | path of the data symbol sequence |
| 44a | look-up table for post-transmission compensation |
| 44b | look-up table for prior-transmission compensation |
| 45 | look-up table filling unit |
| 46 | compensation mode selector |

The equalizer 30 is inserted in the data symbol path P between the end of the optical fiber 2 which connects the equipment and the data recovering and source unit 50. The modulation management unit 41, the wavelength management unit 42, and the ranging unit 43 form the means for obtaining the values of the optical transmission features which have been introduced above. According to the invention, the equipment contains the compensation manager 40 in addition to the data recovering and source unit 50 and the equalizer 30. The modulation management unit 41, the wavelength management unit 42, the ranging unit 43, the look-up tables 44a and 44b, the look-up table filling unit 45 and the compensation mode selector 46 pertain to the compensation manager 40.

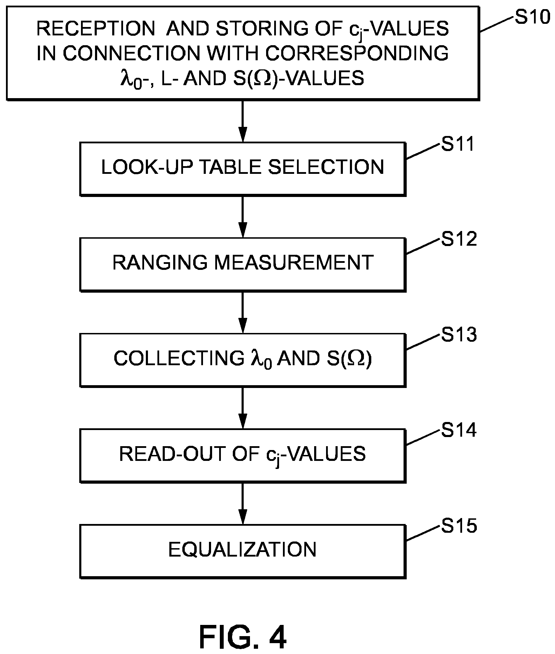

Referring now to Figure 4, the operation of an optical network unit, for example the base station 10e, is described below.

In a preliminary step S10, the base station 10e receives the $c_j$-values in connection with the corresponding values for the optical transmission features, from the equalizer calculator module 20. The $c_j$-values are then stored in the look-up tables 44a and 44b hosted by the base station 10e. Preferably, the base station 10e may host one such look-up table (44a) for post-transmission dispersion compensation, and another one (44b) for prior-transmission dispersion compensation. They are filled with the $c_j$-values received by the look-up table filling unit 45.

When the base station 10e is to transmit or receive a data symbol sequence, it first selects the look-up table 44a or 44b in step S11, depending on the data symbol sequence being transmitted or received by the base station 10e. If the data symbol sequence is received by the base station 10e, the look-up table 44a which has been calculated by the equalizer calculation module 20 for post-transmission dispersion compensation is selected. Conversely, if the data symbol sequence is transmitted by the base station 10e, the look-up table 44b calculated for prior-transmission dispersion compensation is selected. Also possibly, no dispersion compensation may be implemented at the base station 10e, if the whole compensation is performed by the other optical network equipment from which the data symbol sequence originates, or will be performed upon reception by the other optical network equipment to which the data symbol sequence is to be transmitted by the base station 10e. Possibly again, part dispersion compensation may be performed by the base station 10e, and complementary dispersion compensation may be performed by the other optical network equipment involved in the transmission of the data symbol sequence. For such cases of distributed dispersion compensation, separate look-up tables are to be provided for part post-transmission dispersion compensation and part prior-transmission dispersion compensation, which are different from the look-up tables which relate to complete dispersion compensations. Also various distributions between part post-transmission dispersion compensation and part prior-transmission dispersion compensation for one and same transmission path require implementing different pairs of post- and prior-transmission dispersion compensation look-up tables. All these situations may be referred to as distinct compensation modes, and the look-up table to be used is determined based on the compensation mode by the selector 46.

In particular, at the line termination 1, successive time slots which are dedicated to receptions of data symbols originating from separate optical network units, involve optical transmission paths which are different. Therefore, the post-transmission dispersion compensation to be produced is different from one time slot to another, and the look-up table to be selected is to be varied accordingly.

In a further step S12, the compensation manager 40 of the base station 10e may trigger the ranging unit 43 for emitting a ranging measurement sequence, and determining the optical fiber length L of the transmission path used for the data symbol transmission. Such ranging measurement operation is well-known in the art.

In step S13, the compensation manager 40 collects the optical carrier wavelength value $\lambda_0$ and the spectral support $S(\Omega)$ which are used for transmitting the data symbol sequence, from the wavelength management unit 41. The spectral support $S(\Omega)$ is supplied by the modulation management unit 41, and the wavelength value $\lambda_0$ is supplied by the wavelength management unit 42.

Based on the values collected in steps S12-S13 for the optical transmission features, the compensation manager 40 reads out the values of the filtering coefficients $c_j$ from the look-up table 44a or 44b which has been selected in step S11. It uploads them into the equalizer 30. This read-out step is labeled S14 in Figure 4.

Then, the equalizer 30 is ready for processing the data symbol sequence on-the-flight, just before it is received or just after it is transmitted by the data recovering and source unit 50 of the base station 10e. This compensation step is called equalization and labeled S15.

It should be understood that the invention may be reproduced while changing or adapting secondary aspects with respect to the description just provided. Indeed, such secondary aspects may not be directly connected to the main advantages of the invention, which have been fully explained. For example, an equipment structure which is different from that of Figure 3 may be implemented, and the chronological execution order of steps S11, S12 and S13 in Figure 4 may be changed. Also an equalizer calculation module as implemented in the invention may be located in a cloud, and connected appropriately to the optical fiber transmission network.

It is also reminded that the invention may be implemented with any modulation type used for keying the data symbols, including phase-keying and any combination of phase- and amplitude-keying.

## Claims

1. Optical fiber transmission process, for transmitting a plurality of data symbols through an optical fiber transmission network (100) which connects an optical line termination (1) to at least one optical network unit (10a-10e), wherein at least one among the optical line termination (1) and the optical network unit (10a-10e), called equalizing end, is provided with storing means suitable for storing values a series of filtering coefficients ($c_j$), and combination means suitable for linearly combining the data symbols which are successively transmitted, said process comprising transmitting successively the data symbols upstream or downstream between the optical line termination (1) and the optical network unit (10a-10e), and also comprising the following steps:

   /1/ collecting values of optical transmission features which are implemented for the transmission of the data symbols;
   /2/ based on the values of optical transmission features, calculating a set of respective values for the filtering coefficients ($c_j$), suitable for forming a digital filter when said filtering coefficients are used for linearly combining the data symbols successively transmitted, and such that the digital filter equalizes at least partially a group propagation delay which is effective onto the data symbols being transmitted, and called dispersion delay;
   /3/ storing the values calculated for the filtering coefficients ($c_j$) at the equalizing end; and

/4/ by the combination means of the equalizing end: processing the data symbols successively transmitted with the digital filter formed by the filtering coefficients ($c_j$) values stored, so that recovered data symbols which are obtained after both the transmission and filter-processing of said data symbols, have reduced symbol time-spreading and reduced inter-symbol overlapping due to dispersion, when compared to transmission of said data symbols without filter-processing.

2. Optical fiber transmission process according to Claim 1, wherein the data symbols are amplitude-modulated data symbols.

3. Optical fiber transmission process according to Claim 1 or 2, wherein the data symbols are transmitted through the optical fiber transmission network (100) between the optical line termination (1) and the optical network unit (10a-10e) at a rate of between 10 Gbit/s and 100 Gbit/s.

4. Optical fiber transmission process according to any one of the preceding claims, wherein the values of the filtering coefficients ($c_j$) are calculated by an equalizer calculation module (20), and then transmitted by said equalizer calculation module to the equalizing end through said optical fiber transmission network.

5. Optical fiber transmission process according to any one of the preceding claims, wherein the filtering coefficients ($c_j$) calculated in step /2/ are such that processing the data symbols with the digital filter equalizes at least partially a chromatic dispersion.

6. Optical fiber transmission process according to Claim 5, wherein the optical transmission feature values which are collected in step /1/ comprise at least one among:

   - a wavelength value ($\lambda_0$) of an optical carrier which is used for transmission of the data symbols;
   - an optical fiber length value (L) effective for transmission of the data symbols between the optical line termination (1) and the optical network unit (10a-10e);
   - a feature of a spectral support ($S(\Omega)$) used for forming the data symbols transmitted; and
   - optionally, at least one transfer function pertaining to an optical component which exists within the optical fiber transmission network (100) on a transmission path used by the transmitted data symbols between the optical line termination (1) and the optical network unit (10a-10e).

7. Optical fiber transmission process according to Claim 5 or 6, wherein the filtering coefficients ($c_j$) are calculated in step /2/ by successively performing the following sub-steps:

   /2-1/ calculating a transfer function of an optical fiber transmission path used by the data symbols between the optical line termination (1) and the optical network unit (10a-10e), from the values collected in step /1/ for the optical transmission features;
   /2-2/ calculating an impulse response of said transmission path, using a Fourier transform of the transfer function;
   /2-3/ calculating a Z-transform of the impulse response; then
   /2-4/ determining the series of filtering coefficients ($c_j$) as polynomial coefficients of a complex function equal to unity divided by the Z-transform of the impulse response.

8. Optical network equipment for optical fiber transmission network (100), suitable for forming either an optical line termination (1) or an optical network unit (10a-10e), which comprises:

   - coefficient reception means, suitable for receiving values of filtering coefficients ($c_j$);
   - storage means, suitable for storing the received values of the filtering coefficients ($c_j$); and
   - combination means (30), suitable for linearly combining data symbols which are successively transmitted or received by said optical network equipment, using the stored values of the filtering coefficients ($c_j$).

9. Optical network equipment according to Claim 8, wherein the storage means comprise at least one look-up table (44a, 44b) which has values of optical transmission features for forming entries of said look-up table, and is designed for containing the values of the filtering coefficients ($c_j$) in connection with combinations of the entries, and wherein the optical network equipment further comprises:

   - means for obtaining the values of the optical transmission features which are implemented for a data symbol transmission originating from or ending up at said optical network equipment; and

- means for reading out the values of the filtering coefficients ($c_j$) from the at least one look-up table (44a, 44b) based on the values obtained for the optical transmission features.

10. Optical network equipment according to Claim 9, wherein the storage means comprises at least two look-up tables (44a, 44b), one dedicated to data symbol transmissions which end up at said optical network equipment, and another one dedicated to data symbol transmissions which originate from said optical network equipment, and wherein the optical network equipment is further adapted for selecting one of the look-up tables (44a, 44b) based on the transmission either ending up at said optical network equipment or originating from said optical network equipment.

11. Equalizer calculation module (20), suitable for transmitting values to at least one equipment connected to an optical fiber transmission network (100), said equalizer calculation module comprising:

- selection means, suitable for selecting respective values of optical transmission features which relate to a transmission of data symbols between an optical line termination (1) and an optical network unit (10a-10e) of the optical fiber transmission network (100);
- equalizer calculation means, suitable for calculating from the values selected for the optical transmission features, a set of respective values for filtering coefficients ($c_j$) which form a digital filter when said filtering coefficients are used for linearly combining the data symbols successively transmitted, and such that processing said data symbols with the digital filter equalizes at least partially a group propagation delay which is effective onto the data symbols being transmitted in accordance with the optical transmission feature values selected; and
- transmission means, suitable for transmitting the values calculated for the filtering coefficients ($c_j$) to at least one of the optical line termination (1) and the optical network unit (10a-10e) where equalization of the group propagation delay is to be implemented for data symbols transmitted.

12. Equalizer calculation module (20) according to claim 11, suitable for calculating the filtering coefficients ($c_j$) by implementing the following sub-steps:

/2-1/ calculating a transfer function of an optical fiber transmission path between the optical line termination (1) and the optical network unit (10a-10e), from the values selected for the optical transmission features;
/2-2/ calculating an impulse response of said transmission path, using a Fourier transform of the transfer function;
/2-3/ calculating a Z-transform of the impulse response; then
/2-4/ determining the filtering coefficients ($c_j$) as polynomial coefficients of a complex function equal to unity divided by the Z-transform of the impulse response.

FIG. 1

SELECTING VALUES FOR $\lambda_0$, L AND $S(\Omega)$ —— S0

CALCULATION OF THE TRANSFER FUNCTION $H(\omega)$ —— S1

IMPULSE RESPONSE CALCULATION —— S2

LAPLACE TRANSFORM CALCULATION —— S3

$F(z)$

CALCULATION OF THE FILTERING COEFFICIENTS —— S4

$c_j$

SENDING OF $c_j$-VALUES WITH CORRESPONDING $\lambda_0$-, L- AND $S(\Omega)$-VALUES —— S5

# FIG. 2

**FIG. 3**

RECEPTION AND STORING OF $c_j$-VALUES IN CONNECTION WITH CORRESPONDING $\lambda_0$-, L- AND S($\Omega$)-VALUES — S10

↓

LOOK-UP TABLE SELECTION — S11

↓

RANGING MEASUREMENT — S12

↓

COLLECTING $\lambda_0$ AND S($\Omega$) — S13

↓

READ-OUT OF $c_j$-VALUES — S14

↓

EQUALIZATION — S15

## FIG. 4

Europäisches
Patentamt

European
Patent Office

Office européen
des brevets

# EUROPEAN SEARCH REPORT

Application Number

EP 17 30 5295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/226631 A1 (THOMSON SANDY [CA] ET AL) 13 October 2005 (2005-10-13) | 1-7 | INV.<br>H04B10/2513 |
| Y | * paragraph [0006] *<br>* paragraph [0022] - paragraph [0023] *<br>* figures 1-2 * | 8-12 | |
| X | WO 2012/154703 A1 (OFS FITEL LLC [US]; MIKHAILOV VITALY [US]; WESTBROOK PAUL S [US]) 15 November 2012 (2012-11-15) | 1-7 | |
| Y | * paragraph [0062] * | 8-12 | |
| Y | US 2016/277118 A1 (CHÂTELAIN BENOÎT [CA] ET AL) 22 September 2016 (2016-09-22)<br>* paragraph [0005] *<br>* figure 1 * | 8-12 | |

TECHNICAL FIELDS
SEARCHED      (IPC)

H04B

The present search report has been drawn up for all claims

| Place of search | Date of completion of the search | Examiner |
|---|---|---|
| Munich | 15 September 2017 | Inan, Beril |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 30 5295

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2017

| Patent document cited in search report | Publication date | Patent family member(s) | Publication date |
|---|---|---|---|
| US 2005226631 A1 | 13-10-2005 | NONE | |
| WO 2012154703 A1 | 15-11-2012 | US  2014140693 A1<br>WO  2012154703 A1 | 22-05-2014<br>15-11-2012 |
| US 2016277118 A1 | 22-09-2016 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.G. PROAKIS.** Digital Communication. MacGraw Hill, 1995